# NEW EUROPEAN PATENT SPECIFICATION

(11) **EP 2 021 722 B2**
(45) Date of publication and mention of the opposition decision: **09.10.2019**
(45) Mention of the grant of the patent: 23.01.2013
(21) Application number: 07713443.5
(22) Date of filing: 09.02.2007
(51) Int. Cl.: F28F 1/16, F24H 9/00

(54) **RADIATOR ELEMENT AND CAP**
HEIZKÖRPERELEMENT UND KAPPE
ÉLÉMENT DE RADIATEUR ET COUVERCLE

(30) Priority: 01.06.2006 IT MI20061079
(43) Date of publication of application: 11.02.2009
(73) Proprietor: MECC-LAN S.r.l., 25030 Zocco d'Erbusco (BS) (IT)
(72) Inventor: LANCINI, Franco, 25030 Adro, Brescia (IT)
(74) Representative: Pulieri, Gianluca Antonio
(86) International application number: PCT/IT2007/000086
(87) International publication number: WO 2007/138627

(56) References cited:
- EP-A- 1 182 165
- EP-A1- 0 561 299
- EP-A1- 1 039 257
- EP-A2- 0 383 336
- EP-A2- 1 553 373
- WO-A-2005/007556
- WO-A1-2004/101379
- DE-A1- 3 736 107
- DE-A1- 4 143 034
- DE-C1- 19 637 324
- GB-A- 699 032
- GB-A- 2 121 144
- GB-A- 2 121 144
- GB-A- 191 113 215
- JP-A- 4 335 995
- JP-A- 6 031 555
- JP-A- 7 139 852
- JP-A- 57 189 742
- JP-A- 62 256 612
- JP-A- 2001 311 596
- JP-A- 2003 139 484
- US-A- 2 063 967
- US-A- 4 106 655
- US-A- 4 574 458
- US-A- 4 582 127
- US-A1- 2001 045 001

## Description

The present invention relates to a radiator element and a cap as disclosed in DE 196 37 324.

In particular, the present invention applies to radiator elements made by die casting wherein after having drawn the element from the die, the element exhibits an open end required for drawing a plunger or bar required for obtaining the inner cavity of the element intended for seating the radiant fluid.

In the radiator elements of the prior art, -a cap is sided to the open end and is butt welded for example by a welding robot, typically by autogenous welding or brazing, that is, without the contribution of material.

This solution is very slow and expensive to make and implies large material waste due to welding inaccuracies. Moreover, subsequent to the welding there occur unavoidable burrs that among the others worsen the appearance of the element and cause inaccuracies in the subsequent operation of coating of the radiator element.

The problem to be solved by the present invention is to provide a radiator element and a cap which should solve the disadvantages mentioned with reference to the prior art.

Such disadvantages and limits are solved by a radiator element and a cap in accordance with claim 1.

Other embodiments are described in the subsequent claims.

Further features and the advantages of the present invention will appear more clearly from the following description of preferred non-limiting embodiments thereof, wherein:

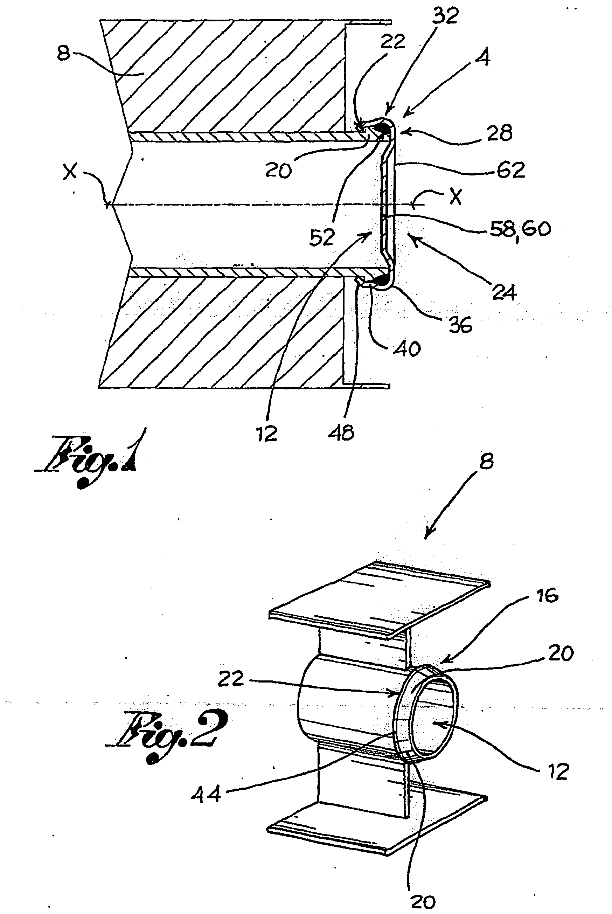

figure 1 shows a section view of a radiator element provided with a cap according to the present invention;
figure 2 shows a perspective view of the radiator element of figure 1;

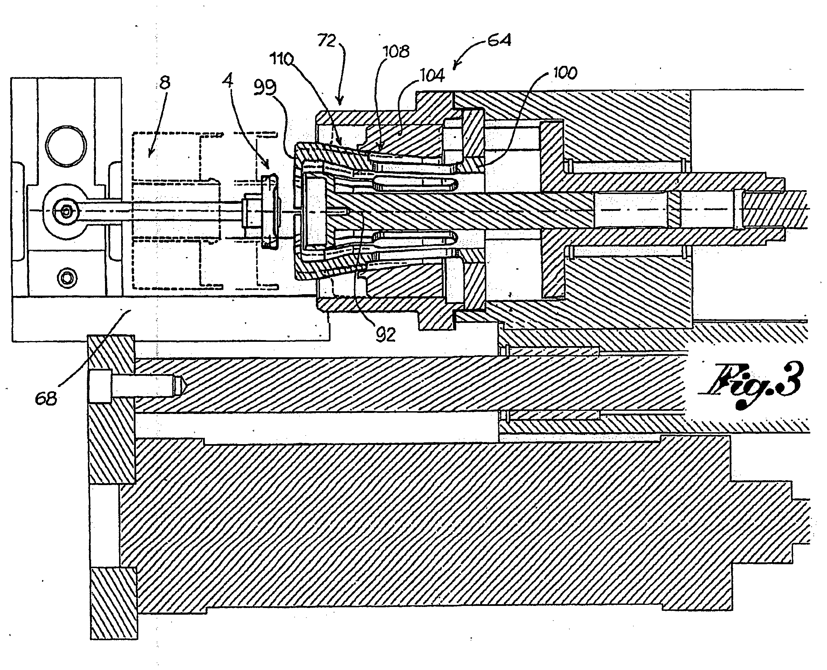

figure 3 shows a side partial section view of an assembling device for the cap of figure 1 on a radiator element;
figure 4 shows a perspective view of the assembling device of figure 3, in a step of assembly of the cap on the radiator element;
figure 5 shows a perspective view of the assembling device of figure 3, in a further step of assembly of the cap on the radiator element;

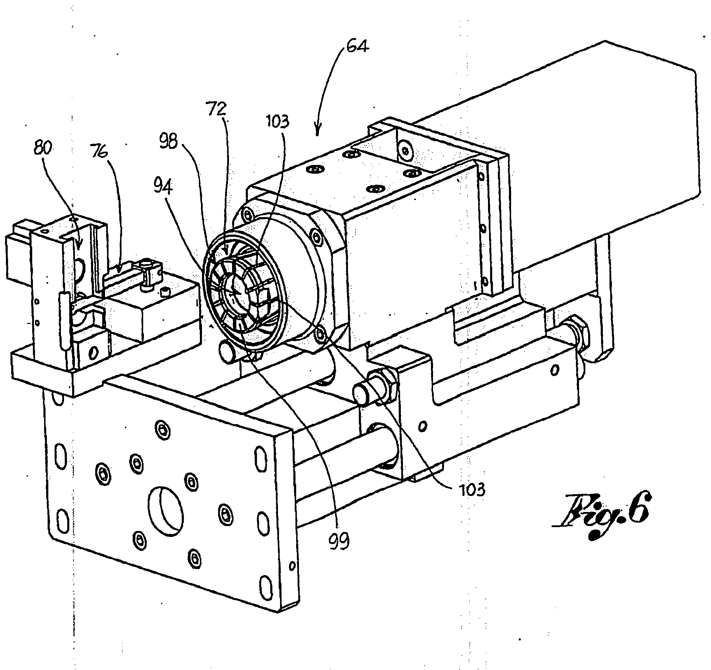

figure 6 shows a perspective view of an assembling device.

Elements or parts of elements in common between the embodiments described below are referred to with the same reference numerals.

With reference to the above figures, reference numeral 4 globally denotes a cap for radiator elements 8, suitable for closing an open end 12 of a radiator element 8.

The radiator element 8 comprises an elongated hollow body, extending along a prevailing direction X, suitable for being crossed by a thermal exchange fluid and ends with two opposite ends.

In radiator elements 8 obtained by die casting, the cavity is usually obtained by the use of a plunger or bar, with elongated shape, which subsequent to the injection of metal material, is drawn. The end the bar is drawn from therefore is an open end 12.

Said end 12, exhibits a cylindrical configuration, axial-symmetric relative to the prevailing direction X.

According to the present invention, said open end comprises a coupling portion 16, preferably suitable for favouring the gripping of the associable cap 4.

The radiator element 8, at said coupling portion 16, comprises a protuberance 20 suitable for making an undercut 22 facing opposite the associable cap 4.

Said protuberance 20 has a truncated-cone pattern that tapers towards the associable cap 4, that is, away from undercut 22.

Such coupling portion 16 with the relative protuberance 20 may be obtained directly by die casting, using a suitably counter-shaped bar or plunger, that is, a plunger that exhibits in negative the desired shape of the coupling portion.

Cap 4 has an axial-symmetric shape, preferably relative to an axis coinciding with the prevailing direction X of end 12 of radiator element 8; for example, it has a circular pattern and is counter-shaped relative to the open end 12 so as to seal the same.

Preferably, cap 4 is made of galvanised or aluminised steel or stainless steel.

Cap 4 comprises a closure element 24 suitable for being facing and opposite said end 12, and a collar 28 sealingly associable to said end 12.

Collar 28 comprises a coupling portion 32 suitable for being coupled with said end 12 and in particular with protuberance 20; in other words, the collar is at least partly folded around the end so as to be coupled with said undercut 22 of protuberance 20.

The coupling portion 32 comprises an annular flap 36 folded around end 12 of radiator element 8.

The coupling portion 32 comprises a stop element 40 suitable for abutting on a side edge 44 of end 12 of radiator element 8.

The coupling portion 32 comprises a locking element 48 suitable for abutting against undercut 22 of end 12 of radiator element 8 so as to lock cap 4 in position on radiator element 8.

Cap 4 comprises a sealing element 52 arranged between the closure element and the collar, the sealing element abutting against the end of the radiator element so as to ensure the fluid seal of the cap on the end.

The sealing 52 is arranged in an annular seat 56 obtained between the closure element 24 and collar 28 so as to constrain the sealing element 52 to cap 4.

According to an embodiment, said annular seat 56 is obtained at the annular flap 36.

The annular flap 36 exhibits a diameter larger than the inside diameter of the side edge 44, so that subsequent to the introduction of the seal in the relative seat 56, the seal remains blocked into position or in any case remains held within seat 56 itself.

The sealing element is an o-ring seal.

The seal may for example be made of a polymeric material, such as an EPDM rubber, a VITON rubber, a silicone rubber.

The seal in a non-deformed configuration, has a thickness larger than the gap determined between the coupling portion 16 and cap 4 in a configuration of assembly of cap 4 on end 12.

In other words, the seal for example is obtained with a pipe folded ring-wise wherein the diameter of the pipe section is larger than the gap determined between the coupling portion 16 and cap 4 in a configuration of assembly of cap 4 on end 12, so that following the assembly of cap 4 on end 12, the seal deforms in the relative seat adjusting to the configuration of the coupling portion 16 of radiator element 8.

The closure element 24 comprises a centring portion 58 suitable for favouring the insertion of cap 4 on end 12, penetrating at least partly into said end 12.

The centring portion 58 is obtained by a recess 60 on said cap, on the side of end 12, jointed to the closure element 24 by a union 62.

Advantageously, cap 4 may be mounted on a radiator element 8 by a mounting device.

The mounting device 64 comprises a part holder table 68, suitable for supporting a radiator element 8, gripping pliers 72, suitable for constraining cap 4 to the radiator element 8 and a device for gripping and moving cap 76.

In particular, the radiator element is locked on the part holder table 68 that the open end 12 faces the gripping pliers 72.

A plurality of caps 4 may be loaded in a collecting tank from which caps 4 are channelled into a feeding chute 80 comprising a tape 81 and having a pair of containment guides 82 for caps 4.

Advantageously, caps 4 are loaded into chute 80 with collar 28 facing tape 81.

Chute 80 ends with a stop 84 that makes a stop to the forward motion of the cap, locking the same in a position wherein it is released from guides 82.

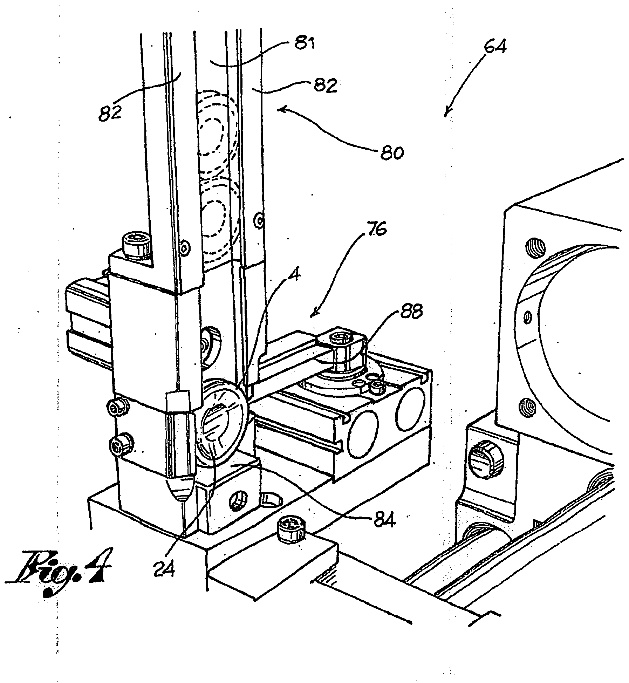

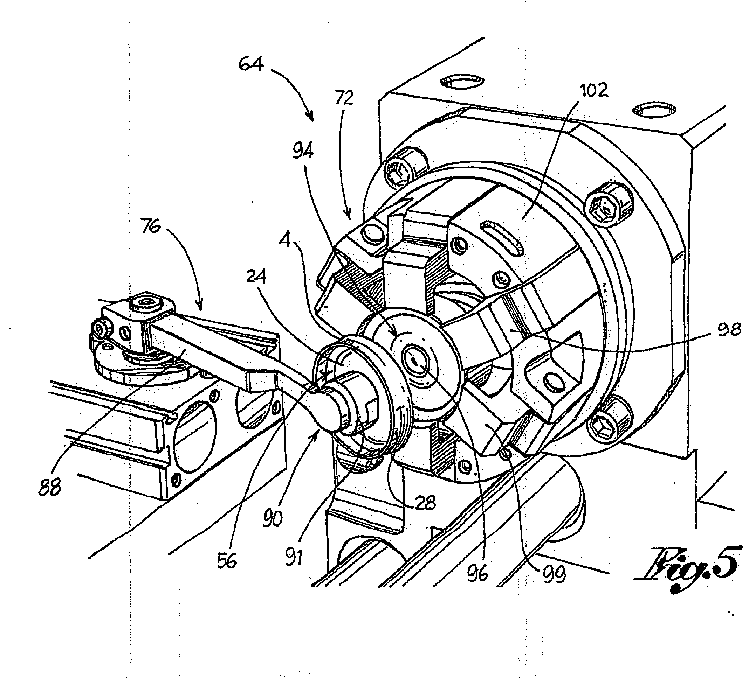

The gripping and moving device 76 comprises an arm 88 preferably provided with rotating motion, so as to rotate according to a circumference arc, for example of about 90 degrees, from a position for gripping a cap 4 (figure 4) to a position for releasing cap 4 (figure 5) .

In particular, arm 88 is provided, on a gripping end 90, with a first magnet 91 so as hook cap 4 upon contact, preferably at the closure element 24 and draw the cap from chute 80, allowing a subsequent cap to abut against stop 84 at the end of chute 80.

The gripping pliers 72 comprise a piston 92 provided with a head 94 counter-shaped relative to cap 4 so as to seat said cap on the side of the closure element 24.

Advantageously, at head 94 piston 92 is provided with a second magnet 96 capable of developing a magnetic field of greater intensity compared to the magnetic field of the first magnet 91 of arm 88.

Pliers 72 comprise a plurality of jaws 98, preferably arranged at a pitch; according to an embodiment, pliers 72 are provided with six jaws 98.

Jaws 98 have a 'C' shape and comprise a finger that develops longitudinally and ends, on the side of the associable cap 4, with a folded portion 99, radially facing the prevailing direction X, thus taking a 'C' shape.

Jaws 98 are operatively connected to a plate 100 and in rest position they tend to elastically bend in radial direction, outwards, away from cap 4.

Jaws 98 are separate from each other by spacers 102 preferably arranged at a pitch between the jaws; the jaws are obtained from at single body which is then divided into multiple portions through notches 103 so as to obtain a plurality of jaws 98 that elastically bend in radial direction.

Pliers 72 comprise a closing bush 104 having a conical wall 108 suitable for interfacing with an outer side wall 110 of jaws 98, so that subsequent to the forward motion of the closing bush 104 towards cap 4, jaws 98 are influenced by the bush itself in a radial closing movement so as to fold collar 28 of the cup radially inwards and grip cap 4 to the end of the radiator element 8.

The folded portions 99 of jaws 98 are preferably counter shaped relative to the coupling portion 32 of cap 4 so that by plastic deformation, the closure of pliers 72 creates the geometry of the stop element 40 and of the locking element 48.

The operation of the assembling device and the relative method of assembly will now be described.

In particular, the radiator elements are arranged on the part holder table 68 of the assembling device 64, so as to arrange them substantially parallel to piston 92, facing ends 12 of the radiator element 8 to pliers 72, and in particular to head 94 of piston 92.

Arm 88, in a gripping position, draws a cap 4 from chute 80 thanks to magnet 91 and rotating, it moves it at head 94 of piston 92.

Upon contact between head 94 of pliers 72 and cap 4, arm 88 returns to the gripping position, in the proximity of chute 80.

Thanks to the force of magnetic attraction of the second magnet 96 of piston 92 that is stronger than that exerted by the first magnet 91, cap 4 remains coupled to piston 92, whereas arm 88 can return to the gripping position, for drawing the next cups.

Then, the closing bush 104 advances towards cap 4, jaws 98 are influenced in a radial movement closure so as to fold collar 28 of cap 4 radially inwards and grip the same cap 4 to end 12 of the radiator element 8.

As can be understood from the description, the radiator element and the cap allow overcoming the disadvantages of the prior art.

In particular, thanks to the cap described it is possible to provide the closure of open ends of radiator elements without having to carry out any welding or brazing. Thus, no welding robots are needed and all the scrap unavoidably related to the use of welding operations is avoided.

Therefore, the cap can be crimped to the relative end without inaccuracies or burrs due to welds and virtually without scrap.

Thanks to the fact that there are no burrs, no subsequent operations are required for improving the appearance of the joint. Moreover the cap, after being crimped, can be directly coated with excellent results because the coating must not cover inaccurate and irregular surfaces like those obtained by welding.

The folding of the cap collar takes place evenly and gradually thank to the concurrent action of a plurality of jaws arranged preferably at a pitch.

In this way, the gripping of the cap on the end is steady and safe, ensuring the proper tightening of the cap on the end of the radiator element.

Such tightening deforms the seal that, adjusting to the shape of the coupling portion of the end ensures proper hermetic seal.

## Claims

1. Radiator element (8) and a cap (4), wherein the radiator element (8) is crossed by a thermal exchange fluid, and comprises a cavity crossed by said fluid and ending with an end (12) being closed by said cap (4), wherein said end (12) comprises a coupling portion (16) suitable for favouring the gripping of the cap (4), wherein said radiator element (8), at said coupling portion (16) of the end (12), comprises a protuberance (20) making an undercut (22) on the side opposite the associable cap (4) for allowing the gripping of the cap (4), wherein said end (12) exhibits a cylindrical configuration, wherein said cap (4) has an axial-symmetric shape, wherein the cap (4) is hydraulically sealingly associated to said end (12) of the radiator element (8), the cap (4) comprising a closure element (24) facing said end (12)
and a collar (28) sealingly associable to said end (12) wherein
the collar (28) comprises a coupling portion (32) coupled with said end (12)
and the cap (4) comprises a sealing element (52) arranged between the closure element (24) and the collar (28), the sealing element (52) abutting against the end (12) of the radiator element (8) so as to ensure the fluid seal of the cap (4) on the end (12), wherein the collar (28) is at least partly folded around the end (12) so as to be hooked to said protuberance (20) of said end (12),
wherein
the closure element (24) comprises a centring portion (58) suitable for favouring the insertion of the cap (4) on the end (12), penetrating at least partly in said end (12),
wherein the centring portion (58) is obtained by a recess (60) on said cap (4), on the side of the end (12), jointed to the closure element (24) by a union (62), wherein said union (62) is tapered,
**characterised in that**
said protuberance (20) has a truncated-cone pattern that tapers towards the associable cap (4), that is away from undercut (22),
wherein the sealing element (52) is an o-ring seal,
wherein said seal (52) in a non-deformed configuration, has a thickness larger than the gap determined between the coupling portion (16) and the cap (4), in a configuration of assembly of the cap (4) on the end (12), wherein the coupling portion (32) comprises a locking element (48) abutting against an undercut (22) of the end (12) of the radiator element (8) so as to lock the cap (4) into position on the radiator element (8).

2. Radiator element (8) and a cap (4) according to claim 1, wherein the coupling portion (32) comprises an annular flap (36) folded around the end (12) of the radiator element (8).

3. Radiator element (8) according to any one of the previous claims, wherein the coupling portion (32) comprises a stop element (40) abutting on a side edge (44) of the end (12) of the radiator element (8).

4. Radiator element (8) and a cap (4) according to any one of the previous claims, wherein the sealing element (52) is arranged in an annular seat (56) obtained between the closure element (24) and collar (28) so as to ensure the fluid seal of the cap (4) on the end (12).

5. Radiator element (8) and a cap (4) according to claim 4, wherein said annular seat (56) is obtained at an annular flap (36) of the coupling portion (32).

6. Radiator element (8) and a cap (4) according to any one of the previous claims, wherein said seal is of a polymeric material, such as an EPDM rubber, a VITON rubber or a silicone rubber.

## Patentansprüche

1. Heizkörperelement (8) und eine Kappe (4), wobei das Heizkörperelement (8) von einem Wärmeaustauschfluid durchquert wird und einen Hohlraum umfasst, der von dem Fluid durchquert wird und mit einem Ende (12) endet, das durch die Kappe (4) verschlossen wird, wobei das Heizungselement (8) an dem Ende (12) einen Vorsprung (20) umfasst, der einen Ausschnitt (22) auf der Seite entgegengesetzt zu der zugehörigen Kappe (4) bildet, um das Greifen der Kappe (4) zuzulassen, wobei das Ende (12) eine zylindrische Konfiguration aufweist, wobei die Kappe (4) eine axialsymmetrische Form aufweist, wobei die Kappe (4) hydraulisch abdichtend mit dem Ende (12) des Heizungselements (8) verbunden ist, wobei die Kappe (4) ein Verschlusselement (24) umfasst, das dem Ende (12) zugewandt ist,
und eine Manschette (28), die abdichtend mit dem Ende (12) verbindbar ist, wobei
die Manschette (28) einen Kopplungsabschnitt (32) umfasst, der mit dem Ende (12) verbunden ist,
und die Kappe (4) ein Dichtungselement (52) umfasst, das zwischen dem Verschlusselement (24) und der Manschette (28) angeordnet ist, wobei das Dichtungselement (52) an dem Ende (12) des Heizkörperelements (8) anliegt, um die Fluiddichtung der Kappe (4) auf dem Ende (12) sicher zu stellen, wobei die Manschette (28) wenigstens teilweise um das Ende (12) gefaltet ist, um an dem Vorsprung (20) des Endes (12) verhakt zu werden,
**dadurch gekennzeichnet, dass**
das Verschlusselement (24) einen Zentrierungsabschnitt (58) umfasst, der geeignet ist, um das Einsetzen der Kappe (4) auf dem Ende (12) zu begünstigen, wobei er wenigstens teilweise in das Ende (12) eindringt,
wobei der Zentrierungsabschnitt (58) durch eine Aussparung (60) auf der Kappe (4) auf der Seite des Endes (12) erhalten wird, die durch ein Verbindungsstück (62) mit dem Verschlusselement (24) zusammengefügt wird, wobei das Verbindungsstück (62) konisch zuläuft.

2. Heizkörperelement (8) und eine Kappe (4) nach Anspruch 1, wobei der Verbindungsabschnitt (32) eine ringförmige Lasche (36) umfasst, die um das Ende (12) des Heizkörperelements (8) gefaltet wird.

3. Heizkörperelement (8) nach einem der vorhergehenden Ansprüche, wobei der Kopplungsabschnitt (32) ein Anschlagelement (40) umfasst, das auf einem Seitenrand (44) des Endes (12) des Heizkörperelements (8) anliegt.

4. Heizkörperelement (8) und eine Kappe (4) nach einem der vorhergehenden Ansprüche, wobei der Kopplungsabschnitt (32) ein Arretierelement (48) umfasst, das an einem Ausschnitt (22) des Endes (12) des Heizkörperelements (8) anliegt, um die Kappe (4) in ihrer Position auf dem Heizkörperelement (8) zu arretieren.

5. Heizkörperelement (8) und eine Kappe (4) nach einem der vorhergehenden Ansprüche, wobei das Dichtungselement (52) in einer ringförmigen Auflage (56) angeordnet ist, die zwischen dem Verschlusselement (24) und der Manschette (28) erhalten wird, um die Fluiddichtung der Kappe (4) auf einem Ende (12) sicherzustellen.

6. Heizkörperelement (8) und eine Kappe (4) nach Anspruch 5, wobei die ringförmige Auflage (56) an einer ringförmigen Lasche (36) des Kopplungsabschnitts (32) erhalten wird.

## Revendications

1. Elément de radiateur (8) et couvercle (4), dans lesquels l'élément de radiateur (8) est traversé par un fluide d'échange thermique, et comprend une cavité traversée par ledit fluide et se terminant par une extrémité (12) fermée par ledit couvercle (4), dans lesquels ladite extrémité (12) comprend une partie de couplage (16) adaptée pour favoriser la saisie du couvercle (4), dans lesquels ledit élément de radiateur (8), au niveau de ladite partie de couplage (16) de l'extrémité (12), comprend une saillie (20) réalisant une contre-dépouille (22) sur le côté opposé au couvercle pouvant être associé (4) pour permettre la saisie du couvercle (4), dans lesquels ladite extrémité (12) montre une configuration cylindrique, dans lesquels ledit couvercle (4) présente une forme symétrique axiale, dans lesquels le couvercle (4) est associé de manière étanche hydrauliquement à ladite extrémité (12) de l'élément de radiateur (8), le couvercle (4) comprenant un élément de fermeture (24) faisant face à ladite extrémité (12) et un collier (28) pouvant être associé de manière étanche à ladite extrémité (12)
dans lesquels
le collier (28) comprend une partie de couplage (32) couplée à ladite extrémité (12),
et le couvercle (4) comprend un élément étanche (52) disposé entre l'élément de fermeture (24) et le collier (28), l'élément étanche (52) butant contre l'extrémité (12) de l'élément de radiateur (8) de sorte à assurer l'étanchéité au fluide du couvercle (4) sur l'extrémité (12), dans lesquels le collier (28) est au moins en partie plié autour de l'extrémité (12) de sorte à être accroché à ladite saillie (20) de ladite extrémité (12), dans lesquels
l'élément de fermeture (24) comprend une partie de centrage (58) adaptée pour favoriser l'insertion du couvercle (4) sur l'extrémité (12), pénétrant au moins en partie dans ladite extrémité (12),
dans lesquels la partie de centrage (58) est obtenue par un évidement (60) sur ledit couvercle (4), sur le côté de l'extrémité (12), articulé à l'élément de fermeture (24) par un raccord (62), dans lesquels ledit raccord (62) est rétréci,
**caractérisé en ce que**
ladite saillie (20) présente un motif tronconique qui se rétrécit vers le couvercle pouvant être associé (4) qui est à l'opposé de la contre-dépouille (22),
dans lesquels l'élément étanche (52) est un joint torique,
dans lesquels ledit joint (52) dans une configuration non déformée présente une épaisseur plus grande que la fente déterminée entre la partie de couplage (16) et le couvercle (4), dans une configuration d'assemblage du couvercle (4) sur l'extrémité (12),
dans lesquels la partie de couplage (32) comprend un élément de verrouillage (48) butant contre une contre-dépouille (22) de l'extrémité (12) de l'élément de radiateur (8) de sorte à verrouiller le couvercle (4) en position sur l'élément de radiateur (8).

2. Elément de radiateur (8) et couvercle (4) selon la revendication 1, dans lesquels la partie de couplage (32) comprend un volet annulaire (36) plié autour de l'extrémité (12) de l'élément de radiateur (8).

3. Elément de radiateur (8) selon l'une quelconque des revendications précédentes, dans lequel la partie de couplage (32) comprend un élément d'arrêt (40) butant sur une arête latérale (44) de l'extrémité (12) de l'élément de radiateur (8).

4. Elément de radiateur (8) et couvercle (4) selon l'une quelconque des revendications précédentes, dans lesquels l'élément étanche (52) est disposé dans un siège annulaire (56) obtenu entre l'élément de fermeture (24) et le collier (28) de sorte à assurer l'étanchéité au fluide du couvercle (4) sur l'extrémité (12).

5. Elément de radiateur (8) et couvercle (4) selon la revendication 4, dans lesquels ledit siège annulaire (56) est obtenu au niveau d'un volet annulaire (36) de la partie de couplage (32).

6. Elément de radiateur (8) et couvercle (4) selon l'une quelconque des revendications précédentes, dans lesquels ledit joint est en un matériau polymère tel qu'un caoutchouc EPDM, un caoutchouc VITON ou un caoutchouc de silicone.
